# EUROPEAN PATENT APPLICATION

(11) **EP 4 712 239 A2**
(43) Date of publication of application: **18.03.2026**
(21) Application number: 25189631.2
(22) Date of filing: 15.07.2025
(51) Int. Cl.: H01M 50/291, H01M 50/367, H01M 50/293, H01M 50/207, H01M 50/213, H01M 50/333, H01M 50/209

(54) **BATTERY PACK**

(30) Priority: 23.07.2024 CN 202421753803 U
(71) Applicant: AESC Japan Ltd., Yokohama-Shi, Kanagawa 220-0012 (JP)
(72) Inventor: WU, Changjun, Pudong New Area Shanghai, 201315 (CN); CUI, Xin, Pudong New Area Shanghai, 201315 (CN); YANG, Xinwei, Pudong New Area Shanghai, 201315 (CN); HE, Yafei, Pudong New Area Shanghai, 201315 (CN)
(74) Representative: Becker, Eberhard

(57) **Abstract**

Disclosed is a battery pack, including: multiple cells (210); a casing (100), wherein the inner bottom surface (10) of the casing (100) has a stepped surface for dividing the inner bottom surface (10) of the casing (100) into at least two placement areas (11) having a height difference in the height direction of the casing (100), and the cells (210) are placed in each of the placement areas (11). With stepped surfaces disposed on the inner bottom surface (10) of the casing (100), the battery pack may form at least two placement areas (11) with height differences within the casing (100), making it possible to provide a force to the adhesive located in the placement area with a higher height, helping the adhesive flow toward the placement area with lower height.

## Description

### BACKGROUND

### Technical Field

The present disclosure relates to power battery, particularly to a battery pack.

### Description of Related Art

In the related art, existing battery packs include conventional casings and multiple cells disposed within these casings. After the cells are assembled inside the conventional casing, adhesive is injected through an adhesive injection path disposed at the top of the existing battery pack, so that the cells in the existing casing are immersed and packaged by the adhesive.

However, the adhesive exhibits poor fluidity within the casing, potentially resulting in the issue where the adhesive may not completely immerse all cells contained within the existing casing.

Therefore, enhancing the fluidity of the adhesive within the casing has become an urgent issue requiring resolution.

### SUMMARY

In view of the foregoing, the purpose of the present disclosure is to provide a battery pack.

Based on the above purpose, the present disclosure provides a battery pack, including: multiple cells; a casing, wherein the inner bottom surface of the casing has a stepped surface for dividing the inner bottom surface of the casing into at least two placement areas having a height difference in the height direction of the casing, and the cells are placed in each of the placement areas.

Optionally, the casing includes a base plate and a carrying member. The inner side of the base plate has an accommodation space. The carrying member is disposed in the accommodation space. A side-panel surface of the carrying member away from the base plate is constructed as the inner bottom surface of the casing.

Optionally, the carrying member is spaced apart from the base plate to define an exhaust channel between the base plate and the carrying member. The cell has a cell explosion-proof valve. The cell explosion-proof valve faces the inner bottom surface of the casing. The inner bottom surface of the casing is provided with an exhaust vent corresponding to the cell explosion-proof valve. The exhaust vent passes through the carrying member and communicates with the exhaust channel, so that the gas discharged from the cell explosion-proof valve may enter the exhaust channel through the exhaust vent.

Optionally, the carrying member includes at least two carrying sub-panels. The panel surface of each carrying sub-panel away from the base plate is constructed as one placement area. Along a first direction, at least one partition is disposed between each carrying sub-panel and the base plate. The partition divides the exhaust channel into at least two exhaust sub-channels. Two adjacent exhaust sub-channels are sequentially connected head to tail. The first direction is perpendicular to the panel surface of the carrying sub-panel.

Optionally, the partition has a suspension end. An exhaust communication opening is defined between the suspension end of the partition and the inner wall of the casing adjacent thereto, and/or, an exhaust communication opening is defined between the suspension end of the partition and the carrying member adjacent thereto. Adjacent exhaust sub-channels are connected by the exhaust communication opening.

Optionally, along a second direction, the number of the partitions under each carrying sub-panel increases sequentially. The second direction is the direction in which the height of the placement areas increases.

Optionally, along the first direction, the partition adjacent to the carrying sub-panel is defined as a first partition. Along the second direction, the lower panel surface of the carrying sub-panel is not higher than the upper panel surface of the first partition of the adjacent carrying sub-panel on the front side.

Optionally, along the second direction, the lower panel surface of the carrying sub-panel is aligned with the lower panel surface of the first partition of the adjacent carrying sub-panel on the front side.

Optionally, along the first direction, the orthogonal projection of the partition on the corresponding carrying sub-panel at least covers the exhaust vent disposed on the carrying sub-panel.

Optionally, the partition is connected to the carrying member and/or the inner wall of the casing.

Optionally, a packaging layer covering the cells is disposed above each placement area. Along the opposite direction of the second direction, the thickness of the packaging layer corresponding to each placement area increases sequentially. The second direction is the direction in which the height of the placement areas increases.

Optionally, the packaging layer has a top surface. The top surface of the packaging layer is away from the inner bottom surface of the casing. The top surfaces of the packaging layers corresponding to at least part of the placement areas are in alignment.

As can be seen from the above, with stepped surfaces disposed on the inner bottom surface of the casing, the battery pack provided by the present disclosure may form at least two placement areas with height differences within the casing, making it possible to provide a force to the adhesive located in the placement area with a higher height, helping the adhesive flow toward the placement area with lower height. This helps improve the fluidity of the adhesive within the casing, making it easier for the adhesive to fully fill various areas of the casing, and also helps the adhesive surface inside the casing to form a relatively flat surface, making it easier for multiple cells in different areas of the casing to be immersed in the adhesive, which is also beneficial for subsequent assembly process of the battery pack.

### BRIEF DESCRIPTION OF THE DRAWINGS

In order to explain the technical solutions in the present disclosure or related technologies more clearly, the drawings required in the description of the embodiments or related technologies will be briefly introduced below. Clearly, the drawings described below are merely embodiments of the present disclosure. For ordinary technicians in the field, other drawings may be obtained based on these drawings without creative effort.
FIG. 1 is a perspective view of a partial structure of a battery pack according to an embodiment of the present disclosure.
FIG. 2 is a top view of a partial structure of a battery pack according to an embodiment of the present disclosure.
FIG. 3 is a perspective view of a casing of the battery pack according to an embodiment of the present disclosure.
FIG. 4 is a sectional view taken along line A-A in FIG. 2.
FIG. 5 is a sectional view taken along line A-A in FIG. 2 after removing the cells.
FIG. 6 is an enlarged view of a portion B in FIG. 5.
FIG. 7 is an enlarged view of a portion C in FIG. 5.
FIG. 8 is an enlarged view of a portion D in FIG. 5.

### DESCRIPTION OF THE EMBODIMENTS

In order to make the purpose, technical solution, and advantages of the present disclosure more comprehensible, further explanation of the present disclosure will be provided in detail below in conjunction with specific examples and with reference to the accompanying drawings.

It should be noted that: unless otherwise specifically stated, the relative arrangement of components, numerical expressions, and values described in these embodiment do not limit the scope of the present disclosure.

In the meantime, it should be understood that, for ease of description, the dimensions of the various parts shown in the drawings are not drawn according to actual proportional relationships.

The following description of at least one exemplary embodiment is actually only illustrative and is by no means a limitation on the present disclosure and its application or use.

It should be noted that, unless otherwise defined, the technical terms or scientific terms used in the embodiments of the present disclosure should be understood in the general sense by persons with ordinary skill in the field to which the present disclosure belongs. The words "first", "second" and similar words used in the embodiments of the present disclosure do not indicate any sequence, quantity or importance, but are only used to distinguish different components. Words such as "include" or "contain" mean that the elements or objects appearing before the word cover the elements or objects listed after the word and their equivalents, without excluding other elements or objects. Words such as "connect" or "connected" are not limited to physical or mechanical connections, but may include electrical connections, whether direct or indirect. "Up", "down", "left", "right", and so on are only used to indicate relative position relationships, and when the absolute position of the described object changes, the relative position relationship may also change accordingly.

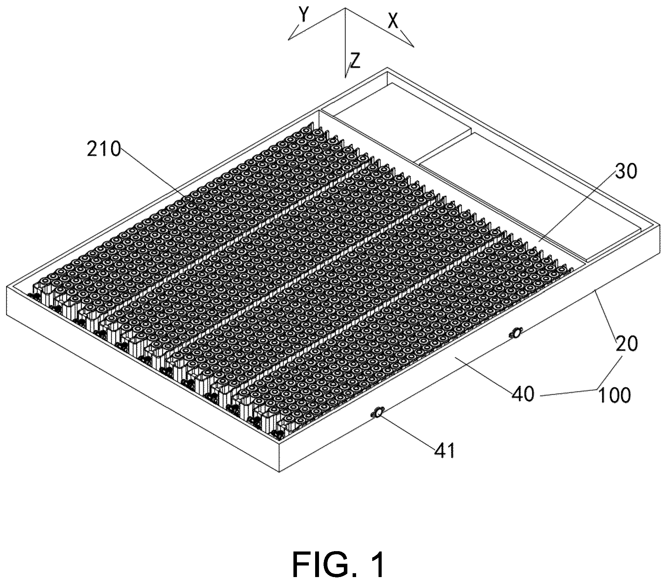

As shown in FIG. 1, FIG. 1 is a perspective view of a partial structure of a battery pack. The battery pack may include a casing 100. The casing 100 may include a base plate 20 and four side plates 40 connected to the edge of the base plate 20. The base plate 20 and the four side plates 40 collectively define an accommodation space 30 located inside the casing 100. At least one side plate 40 of the casing 100 is equipped with a casing explosion-proof valve 41. Exemplarily, the side plate 40 along the width direction of the casing (such as the X direction in FIG. 1) is equipped with a casing explosion-proof valve 41. The battery pack also includes multiple cells 210 disposed in the accommodation space 30. The cells 210 may be columnar cells 210.

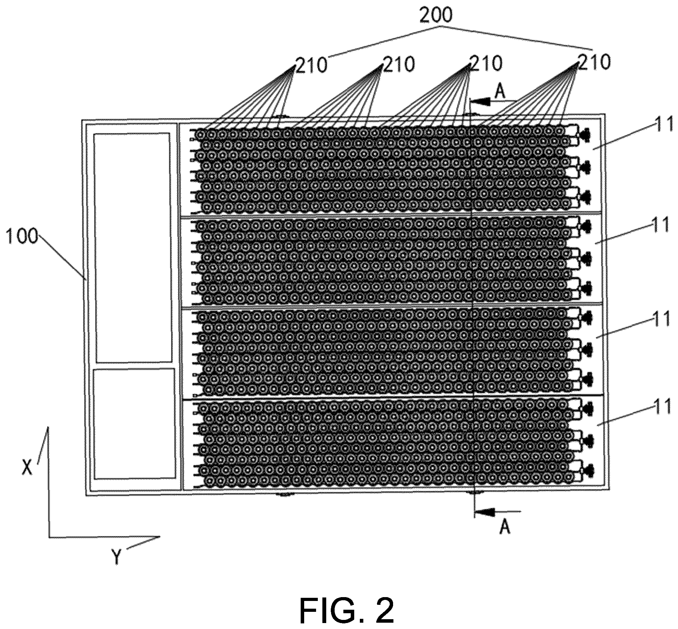

As shown in FIG. 2, FIG. 2 is a top view of a partial structure of a battery pack. Taking the structure shown in FIG. 2 as an example, multiple cells 210 may form multiple cell arrays 200. Multiple cell arrays 200 are distributed along the width direction (such as the X direction in FIG. 2) of the casing 100. Each cell array 200 includes multiple cells 210 distributed along the length direction (such as the Y direction in FIG. 2) of the casing 100. In order to improve the space utilization of the accommodation space 30, adjacent cell arrays 200 may be arranged in a staggered pattern.

In some embodiments, a horizontal support plane is disposed in the accommodation space 30 of the casing 100. Exemplarily, the support plane is constructed from the inner wall of the base plate 20 of the casing 100, or is constructed from the surface of a structural member disposed in the accommodation space 30 of the casing 100. Multiple cells 210 are all placed on this support plane in the accommodation space 30. When pouring adhesive (for example, injecting adhesive) into the casing 100 from the top of the battery pack, after the adhesive flows down to the support plane, the adhesive is expected to flow along the support plane in all directions and fill the accommodation space 30, until all cells 210 in the accommodation space 30 are immersed.

However, the applicant has found that the adhesive itself is quite viscous, and when the adhesive flows along the horizontal support plane, the support plane cannot provide a force to assist the flow of the adhesive, which makes it likely for the adhesive to stagnate during the flow process. Accordingly, adhesive accumulates in some areas within the accommodation space, where the height of the adhesive surface is higher; while in other areas the adhesive is lacking, where the height of the adhesive surface is lower, that is, the adhesive surface in the casing is not easily formed into a relatively flat horizontal surface. When the height of the adhesive surface is uneven, on one hand, it is difficult to ensure that multiple cells in different areas of the casing are completely immersed, and on the other hand, it is also likely to cause an adverse effect the subsequent assembly process of the battery pack.

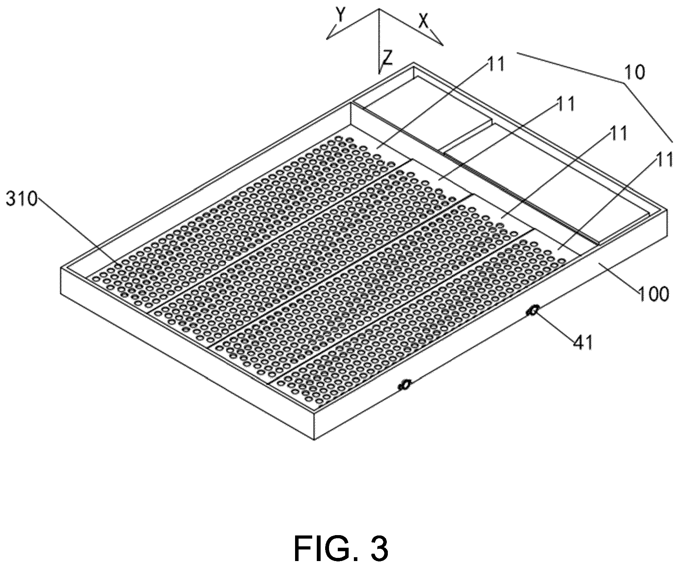

In view of the foregoing, as shown in FIG. 1, an embodiment of the present disclosure provides a battery pack. The battery pack includes a casing 100 and multiple cells 210. As shown in FIG. 3, FIG. 3 is a perspective view of a casing 100. The inner bottom surface 10 of the casing 100 has a stepped surface for dividing the inner bottom surface 10 of the casing 100 into at least two placement areas 11 with height differences in the height direction (such as the Z direction in FIG. 3) of the casing 100, and cells 210 are placed in each placement area 11.

Exemplarily, the cell 210 of this embodiment may be a columnar cell or a prismatic cell.

Exemplarily, the stepped surface of the inner bottom surface 10 of the casing 100 may be constructed from a base plate 20 with uneven thickness, or constructed from a structural member (such as a plate structure or a block structure) with uneven thickness disposed inside the casing 100, or constructed from a plate structure with uniform thickness and in a stepped shape disposed inside the casing 100.

Exemplarily, the height of the placement area 11 may increase sequentially along a single direction, for example, increasing sequentially along the width direction of the casing 100 from one side to the other side. Or, the height of the placement area 11 may increase sequentially along two opposite directions, for example, increasing sequentially from the middle part of the casing 100 toward both sides along the width direction of the casing 100. Or, the height of the placement area 11 may increase sequentially from the middle part of the casing 100 toward the edges simultaneously along the width direction and length direction of the casing 100.

Exemplarily, the surface area of the placement area 11 may be the same or different, and the surface shape of the placement area 11 may be the same or different.

Exemplarily, the height difference between any two adjacent placement areas 11 may be the same or different.

The inner bottom surface 10 of the casing 100 has a stepped surface, and adhesive may be injected from the placement area 11 with the highest height. When the adhesive flows from the placement area 11 with the highest height to the next placement area 11 with a lower height, due to the height difference between the two placement areas 11, the gravitational potential energy of the adhesive may be converted into kinetic energy, facilitating the flow of the adhesive. In the meantime, even if adhesive already exists on the surface of each placement area 11, as long as there is still a height difference in the adhesive surface, it is still possible to provide auxiliary effect on the flow of the adhesive subsequently injected into the casing 100, until the adhesive surface inside the casing 100 forms a relatively flat surface.

With a stepped surface disposed on the inner bottom surface 10 of the casing 100, the battery pack provided by an embodiment of the present disclosure may form at least two placement areas 11 with height differences inside the casing 100, so it is possible to provide force to the adhesive located in the placement area 11 with a higher height, helping the adhesive flow toward the placement area 11 with a lower height. This helps improve the fluidity of the adhesive inside the casing 100, making it easier for the adhesive to fully fill each area of the casing 100, and also helps the adhesive surface inside the casing 100 form a relatively flat surface. In this way, it is easier for multiple cells 210 in different areas of the casing 100 to be immersed in the adhesive, which is also beneficial for the subsequent assembly process of the battery pack.

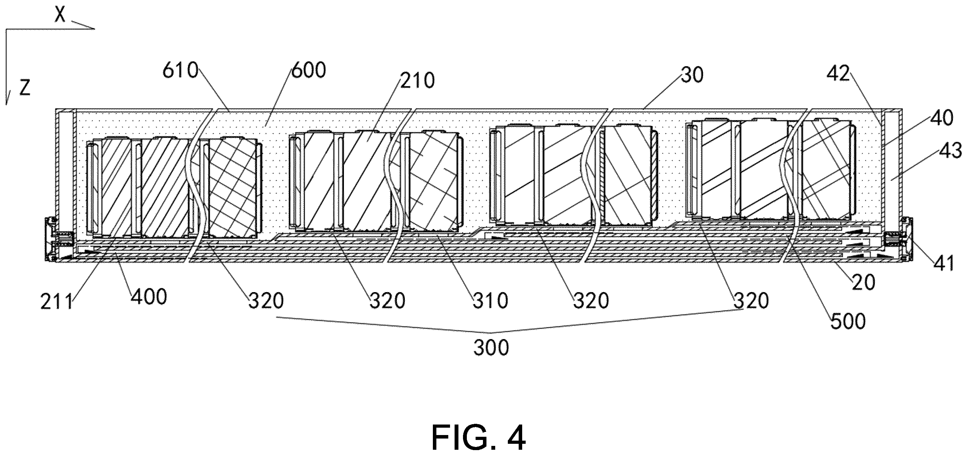

As shown in FIG. 4, FIG. 4 is a sectional view taken along line A-A in FIG. 2. In some embodiments, the casing 100 includes a base plate 20 and a carrying member 300. The inner side of the base plate 20 has an accommodation space 30. The carrying member 300 is disposed in the accommodation space 30, and a side-panel surface of the carrying member 300 away from the base plate 20 is constructed as the inner bottom surface 10 of the casing 100.

Exemplarily, the carrying member 300 may be a step-shaped plate structure with uniform thickness, or a step-shaped block structure with non-uniform thickness.

Exemplarily, the carrying member 300 may be fixedly connected or detachably connected with the base plate 20 of the casing 100, or, the carrying member 300 may be fixedly connected or detachably connected with the side plate 40 of the casing 100.

Exemplarily, the fixed connection between the carrying member 300 and the casing 100 may be achieved through welding, adhesive bonding or integral molding connection, or, the detachable connection between the carrying member 300 and the casing 100 may be achieved through engagement, insertion or fastener connection.

By constructing the stepped surface of the inner bottom surface 10 of the casing 100 through the surface of the carrying member 300 independent of the base plate 20, the base plate 20 of the casing 100 may maintain a plate structure with uniform thickness and relatively small thickness, which on one hand helps simplify the overall structure of the casing 100, and on the other hand also helps save the cost of the casing 100.

As shown in FIG. 4, in some embodiments, the carrying member 300 is spaced apart from the base plate 20 to define an exhaust channel 400 between the base plate 20 and the carrying member 300. The cell 210 has a cell explosion-proof valve 211. The cell explosion-proof valve 211 faces the inner bottom surface 10 of the casing 100. The inner bottom surface 10 of the casing 100 is provided with an exhaust vent 310 corresponding to the cell explosion-proof valve 211. The exhaust vent 310 passes through the carrying member 300 and communicates with the exhaust channel 400, so that the gas discharged from the cell explosion-proof valve 211 may enter the exhaust channel 400 through the exhaust vent 310.

Exemplarily, the configuration position of the casing explosion-proof valve 41 on the side plate 40 corresponds to the exhaust channel 400. When the casing explosion-proof valve 41 is opened, the exhaust channel 400 may communicate with the outside of the casing 100 through the casing explosion-proof valve 41.

Exemplarily, the cell explosion-proof valve 211 is located at the bottom of the cell 210.

Exemplarily, the peripheral side walls of the carrying member 300 are all attached and connected to the inner wall 42 of the casing 100 to improve the airtightness between the exhaust channel 400 and the cell placement space.

Exemplarily, the carrying member 300 may be a plate structure with uniform thickness to facilitate the setting of the exhaust vent 310 that passes through the carrying member 300.

Through the carrying member 300, the cell placement space in the accommodating space 30 for accommodating the cell 210 above the carrying member 300 may be separated from the exhaust channel 400 below the carrying member 300, which may to some extent prevent the gas in the exhaust channel 400 from entering the cell placement space, thus reducing the adverse effect of the gas discharged from the cell explosion-proof valve 211 on other cells 210.

The applicant has found through research that after the cell 210 (especially columnar cell) experiences thermal runaway, the cell 210 has a significant weight loss (weight loss greater than 80% of the original weight of the cell 210). The reason for the significant weight loss of the cell 210 is that when the cell 210 experiences thermal runaway, the gas discharged from the cell explosion-proof valve 211 carries a large amount of solid particulate matter. The gas carrying the particulate matter flows toward the casing explosion-proof valve 41 in the exhaust channel 400, and when the gas reaches the casing explosion-proof valve 41, the gas may be discharged from the casing 100 through the casing explosion-proof valve 41, while at least part of the particulate matter cannot be smoothly discharged from the casing 100 through the casing explosion-proof valve 41. This part of the particulate matter is likely to cause blockage of the casing explosion-proof valve 41, making it impossible for gas subsequently arrived to be discharged from the casing 100 through the casing explosion-proof valve 41, posing a risk of thermal diffusion and fire burning of the battery pack.

In some embodiments, a mesh is disposed in the exhaust channel 400. The mesh is configured to intercept the particulate matter carried in the gas flowing through.

Through the mesh, the particulate matter in the gas may be intercepted before the gas flows to the casing explosion-proof valve 41, which to some extent reduces the risk of particulate matter blocking the casing explosion-proof valve 41. However, if the mesh intercepts a large amount of particulate matter, there is also a risk that the holes of the mesh may be blocked by the particulate matter, which will similarly cause a serious adverse effect on the gas flow in the exhaust channel 400.

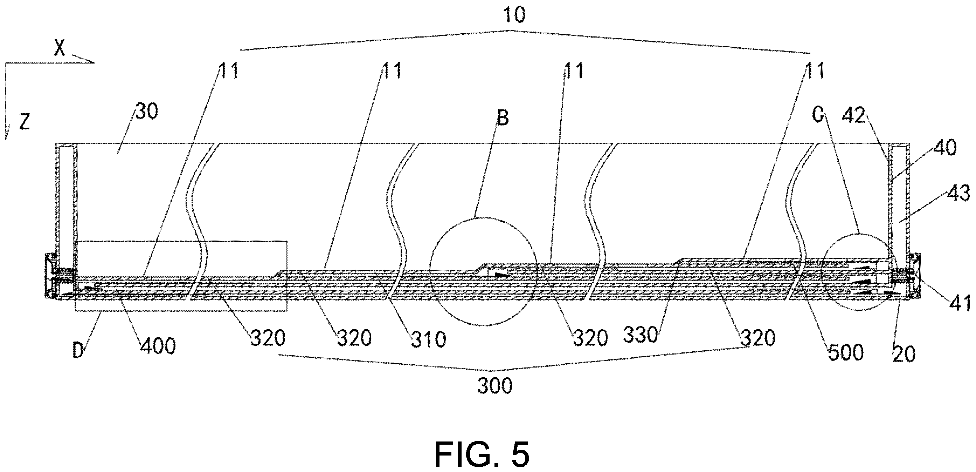

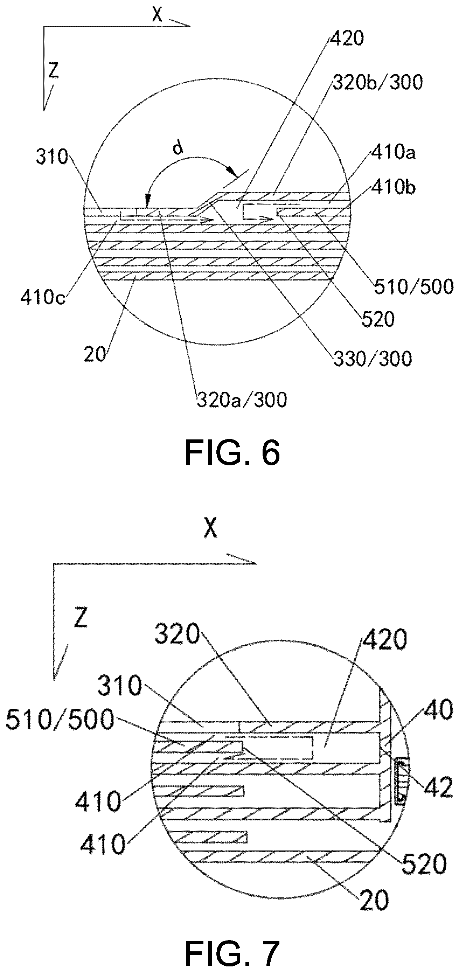

In view of the foregoing, as shown in FIG. 5, FIG. 5 is a sectional view taken along line A-A in FIG. 2 after removing the cells 210. In some embodiments, the carrying member 300 includes at least two carrying sub-panels 320. The panel surface of each carrying sub-panel 320 away from the base plate 20 is constructed as a placement area 11. Along a first direction (such as the Z direction in FIG. 5), at least one partition 500 is disposed between each carrying sub-panel 320 and the base plate 20. As shown in FIG. 6, FIG. 6 is an enlarged view of a portion B in FIG. 5. The partition 500 divides the exhaust channel 400 into at least two exhaust sub-channels 410. Two adjacent exhaust sub-channels 410 are sequentially connected head to tail. The first direction is perpendicular to the panel surface of the carrying sub-panel 320.

Exemplarily, along the first direction, at least two partitions 500 are disposed below each carrying sub-panel 320. In this way, even if the closest partition 500 below the carrying sub-panel 320 is damaged (for example, the partition 500 is penetrated by the gas ejected from the cell explosion-proof valve 211), the partition 500 below the damaged partition 500 may still function to isolate the exhaust channel 400.

Exemplarily, a connecting part 330 is disposed between two adjacent carrying sub-panels 320. The connecting part 330 is fixedly connected with the two carrying sub-panels 320 respectively. Through the connecting part 330, two adjacent carrying sub-panels 320 may be constructed into a continuous plate structure.

Exemplarily, the fixed connection between the connecting part 330 and the carrying sub-panel 320 may be achieved through welding or integral molding connection methods.

Exemplarily, as shown in FIG. 6, the connecting part 330 may be a plate structure. The angle d between the panel surface of the connecting part 330 and the panel surface of the carrying sub-panel 320 is greater than 90° or equal to 90°.

Along the first direction, the partition 500 divides the exhaust channel 400 into at least two exhaust sub-channels 410, with two adjacent exhaust sub-channels 410 sequentially connected head to tail, so the flow direction of the gas will change at the connection between the two adjacent exhaust sub-channels 410.

Specifically, taking the structure and direction in FIG. 6 as an example, the dash-lined arrow in the figure represents the flow path of the gas. The gas flows from right to left in the first exhaust sub-channel 410a. When the gas flows to the connection between the upper first exhaust sub-channel 410a and the lower second exhaust sub-channel 410b, the gas will change its flow direction, flowing from left to right into the second exhaust sub-channel 410b, and continue to flow toward the casing explosion-proof valve 41. It may be understood that when the flow direction of the gas changes, the flow velocity of the gas will decrease, and the ability of the gas to carry particulate matter will also decrease accordingly. Then the particulate matter will deposit at the position where the gas changes its flow direction, that is, gas is separated from solid. Therefore, the number of particulate matter carried by the gas flowing into the second exhaust sub-channel 410b will decrease, which helps to reduce the risk of the casing explosion-proof valve 41 being blocked by particulate matter.

As shown in FIG. 7, FIG. 7 is an enlarged view of a portion C in FIG. 5. In some embodiments, the partition 500 has a suspension end 520, and an exhaust communication opening 420 is defined between the suspension end 520 of the partition 500 and the inner wall 42 of the casing 100 adjacent thereto. Adjacent exhaust sub-channels 410 are connected by the exhaust communication opening 420.

And/or, as shown in FIG. 6, an exhaust communication opening 420 is defined between the suspension end 520 of the partition 500 and the carrying member 300 adjacent thereto, and adjacent exhaust sub-channels 410 are connected by the exhaust communication opening 420.

Exemplarily, in the circumferential direction of the partition 500, one end of the partition 500 that is not connected to other structural members is defined as the suspension end 520.

Exemplarily, the inner wall 42 of the casing 100 is the panel surface of the side plate 40 facing the accommodation space 30.

The partition 500 is spaced apart from the inner wall 42 of the casing 100 to form the exhaust communication opening 420, or the partition 500 is spaced apart from the carrying member 300 to form the exhaust communication opening 420, so that the exhaust communication opening 420 corresponds to the entire edge of the suspension end 520 of the partition 500. In this way, it is possible to make the opening area of the exhaust communication opening 420 larger, further reducing the risk of the exhaust communication opening 420 being blocked by deposited particulate matter. In the meantime, compared with the method of forming the exhaust communication opening 420 by removing the material of the partition 500, the method of forming the exhaust communication opening 420 in this embodiment helps to simplify the internal structure of the casing 100, thus reducing the processing difficulty and the cost of the casing 100.

As shown in FIG. 5, in some embodiments, along the second direction (such as the X direction in FIG. 5), the number of partitions 500 below each carrying sub-panel 320 increases sequentially. The second direction is the direction in which the height of the placement area 11 increases.

Exemplarily, both side plates 40 of the casing 100 along the second direction are provided with casing explosion-proof valves 41.

Exemplarily, a cavity 43 is disposed inside the side plate 40 of the casing 100, and the casing explosion-proof valve 41 extends into the cavity 43. The inner wall 42 of the casing 100 is provided with a through hole. Along the height direction of the casing 100, at least the exhaust sub-channel 410 at the bottommost layer is connected to the cavity 43 through this through hole.

Since the thicknesses of multiple carrying sub-panels 320 are the same, as the height of the placement area 11 increases, the cross-sectional height of the exhaust channel 400 between the carrying sub-panel 320 and the base plate 20 of the casing 100 also increases accordingly. Then the exhaust channel 400 may be divided into more exhaust sub-channels 410 by increasing the number of partitions 500, and the number of corresponding exhaust communication openings 420 will also increase. When gas flows through more exhaust communication openings 420, the number of deposited particulate matters will also be larger, thus further reducing the risk of the casing explosion-proof valve 41 being blocked.

As shown in FIG. 6, in some embodiments, along the first direction (such as the Z direction in FIG. 6), the partition 500 adjacent to the carrying sub-panel 320 is defined as the first partition 510. Along the second direction (such as the X direction in FIG. 6), the lower panel surface of the carrying sub-panel 320 is not higher than the upper panel surface of the first partition 510 of the adjacent carrying sub-panel 320 on the front side.

Taking the structure and direction shown in FIG. 6 as an example for further explanation, along the second direction, the second carrying sub-panel 320b is located on the front side of the first carrying sub-panel 320a, and the height of the second carrying sub-panel 320b is higher than the height of the first carrying sub-panel 320a.

After the gas enters the third exhaust sub-channel 410c through the exhaust vent 310 of the first carrying sub-panel 320a, the gas will flow from left to right. When the gas flows to the exhaust communication opening 420, since the upper panel surface of the first partition 510 corresponding to the second carrying sub-panel 320b is higher than the lower panel surface of the first carrying sub-panel 320a, the entire first exhaust sub-channel 410a is higher than the third exhaust sub-channel 410c. Through such configuration, it is possible to prevent gas from flowing upward into the first exhaust sub-channel 410a, preventing the gas from adversely affecting the cells 210 on the second carrying sub-panel 320b at a higher position, helping to prevent heat diffusion. After passing through the exhaust communication opening 420, the gas will flow downward into the second exhaust sub-channel 410b, and then be discharged out of the casing 100 through the casing explosion-proof valve 41 near the base plate 20 of the casing 100.

As shown in FIG. 6, in some embodiments, along the second direction, the lower panel surface of the carrying sub-panel 320 is aligned with the lower panel surface of the first partition 510 of the adjacent carrying sub-panel 320 on the front side.

Still taking the structure and direction shown in FIG. 6 as an example for further explanation, when the lower panel surface of the first partition 510 corresponding to the second carrying sub-panel 320b is aligned with the lower panel surface of the first carrying sub-panel 320a, on one hand, it is possible to increase the distance between the first exhaust sub-channel 410a and the third exhaust sub-channel 410c along the first direction, further preventing gas flowing out from the third exhaust sub-channel 410c from entering the first exhaust sub-channel 410a; on the other hand, it is possible to align the third exhaust sub-channel 410c with the second exhaust sub-channel 410b, helping the gas flowing out from the third exhaust sub-channel 410c to quickly and smoothly enter the second exhaust sub-channel 410b, and then be discharged out of the casing 100 through the casing explosion-proof valve 41 near the base plate 20 of the casing 100.

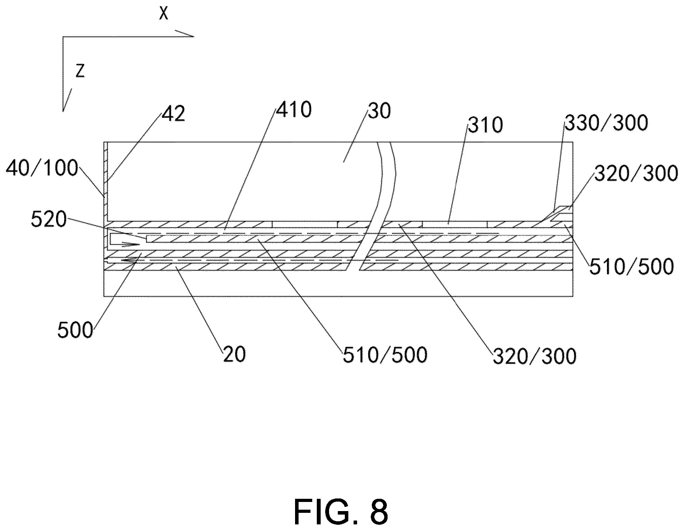

As shown in FIG. 8, FIG. 8 is an enlarged view of a portion D in FIG. 5. In some embodiments, along the first direction (such as the Z direction in FIG. 8), the orthogonal projection of the partition 500 on the corresponding carrying sub-panel 320 at least covers the exhaust vent 310 disposed on the carrying sub-panel 320.

Exemplarily, the exhaust vent 310 of the carrying sub-panel 320 is in one-to-one corresponding relationship with the cell explosion-proof valve 211 of the cell 210 placed on the carrying sub-panel 320.

The partition 500 covers all exhaust vents 310 on the corresponding carrying sub-panel 320, which may ensure that after gas passes through any exhaust vent 310 on the carrying sub-panel 320, the gas will enter the exhaust sub-channel 410 under the action of the partition 500, and achieve gas-solid separation when the gas flows through the exhaust sub-channel 410 toward the casing explosion-proof valve 41, thereby reducing the risk of particulate matter carried by the gas blocking the casing explosion-proof valve 41.

As shown in FIG. 8, the partition 500 is connected to the carrying member 300 and/or the inner wall of the casing 100.

Exemplarily, when the partition 500 is connected to the carrying member 300, the partition 500 may be connected to the connecting part 330 of the carrying member 300.

Exemplarily, along the second direction (such as the X direction in FIG. 8), one side of the connecting part 330 may be connected to the carrying sub-panel 320, and the other side may be connected to the partition 500, with the lower panel surface of the carrying sub-panel 320 being aligned with the lower panel surface of the partition 500.

Exemplarily, when the partition 500 is connected to the casing 100, the partition 500 may be connected to the inner wall 42 of the side plate 40 of the casing 100.

Exemplarily, the partition 500 may be connected to the inner wall of the casing 100 or to the carrying member 300 through welding, adhesive bonding, insertion, engagement, or integrated molding connection methods.

Using the carrying member 300 and/or the inner wall of the casing 100 as the basic structure for fixed connection of the partition 500, on one hand, may improve the overall integration degree of the battery pack and reduce assembly difficulty, and on the other hand, may eliminate the need to design a separate fixing structure for the partition 500, helping to simplify the internal structure of the casing 100 and reduce the cost of the casing 100.

As shown in FIG. 4, in some embodiments, an packaging layer 600 covering the cells 210 is disposed above each placement area 11, and along the opposite direction of the second direction (such as the X direction in FIG. 4), the thickness of the packaging layer 600 corresponding to each placement area 11 increases sequentially. The second direction is the direction in which the height of the placement area 11 increases.

Exemplarily, the packaging layer 600 may be formed by curing foaming adhesive.

Taking the structure and direction shown in FIG. 4 as an example for further explanation, along the opposite direction of the second direction, that is, from right to left, the height of the carrying sub-panel 320 decreases sequentially. Correspondingly, the height of the top of the cells 210 placed on the carrying sub-panel 320 also decreases sequentially. Along the height direction (such as the Z direction in FIG. 4) of the casing 100, the lower the height of the top of the cells 210, the greater the straight-line distance from the top of the cells 210 to the opening at the top of the casing 100, and the larger the space available for setting the packaging layer 600.

The packaging layer 600 covering the top of the cells 210 may provide an packaging effect for the cells 210, which helps prevent exhaust from occurring at the top of the cells 210 (when the cells 210 experience thermal runaway), thus reducing the risk of external short circuits. The greater the thickness of the packaging layer 600, the better its packaging effect on the cells 210.

As shown in FIG. 4, in some embodiments, the packaging layer 600 has a top surface 610. The top surface 610 of the packaging layer 600 is away from the inner bottom surface 10 of the casing 100. The top surfaces 610 of the packaging layer 600 corresponding to at least part of placement areas 11 are in alignment. Preferably, all top surfaces 610 of the packaging layer 600 are in alignment to construct a plane.

Exemplarily, the top surface 610 of the packaging layer 600 is parallel to the plane where the opening at the top of the casing 100 is located.

Before being cured, the packaging layer 600 is a flowable adhesive. The inner bottom surface 10 of the casing 100 forms a stepped surface, which can improve the fluidity of the adhesive within the casing 100. When the surface of the adhesive has not formed a plane, the adhesive at higher positions will continuously flow to lower positions under the action of the height difference formed by the stepped surface. When the adhesive stops flowing, the surface of the adhesive may form a plane.

In the meantime, as long as the thickness of the packaging layer 600 covering the top of the highest cells 210 meets the process requirements, the thickness of the packaging layer 600 covering the top of other cells 210 in the casing 100 will only be thicker, which may ensure that the packaging layer 600 is able to provide an effective packaging function for all cells 210 in the casing 100. Meanwhile, such design also helps to ensure the smooth progress of subsequent assembly process of the battery pack.

## Claims

1. A battery pack, **characterized in that** the battery pack comprising:
a plurality of cells (210);
a casing (100), wherein an inner bottom surface (10) of the casing (100) has a stepped surface for dividing the inner bottom surface (10) of the casing (100) into at least two placement areas (11) having a height difference in a height direction of the casing (100), and the cells (210) are placed in each of the placement areas (11).

2. The battery pack according to claim 1, wherein the casing (100) comprises a base plate (20) and a carrying member (300), an inner side of the base plate (20) has an accommodation space (30), the carrying member (300) is disposed in the accommodation space (30), a side-panel surface of the carrying member (300) away from the base plate (20) is constructed as the inner bottom surface (10) of the casing (100).

3. The battery pack according to claim 1 or 2, wherein the carrying member (300) is spaced apart from the base plate (20) to define an exhaust channel (400) between the base plate (20) and the carrying member (300), each of the cells (210) has a cell explosion-proof valve (211), the cell explosion-proof valve (211) faces the inner bottom surface (10) of the casing (100), the inner bottom surface (10) of the casing (100) is provided with an exhaust vent (310) corresponding to the cell explosion-proof valve (211), the exhaust vent (310) passes through the carrying member (300) and communicates with the exhaust channel (400), so that gas discharged from the cell explosion-proof valve (211) is able to enter the exhaust channel (400) through the exhaust vent (310).

4. The battery pack according to any one of claims 1 to 3, wherein the carrying member (300) comprises at least two carrying sub-panels (320), a panel surface of each of the carrying sub-panels (320) away from the base plate (20) is constructed as one of the placement areas (11), along a first direction, at least one partition (500) is disposed between each of the carrying sub-panels (320) and the base plate (20), the partition (500) divides the exhaust channel (400) into at least two exhaust sub-channels (410), two of the adjacent exhaust sub-channels (410) are sequentially connected head to tail, the first direction is perpendicular to the panel surface of the carrying sub-panel (320).

5. The battery pack according to any one of claims 1 to 4, wherein the partition (500) has a suspension end (520), an exhaust communication opening (420) is defined between the suspension end (520) of the partition (500) and an inner wall of the casing (100) adjacent thereto, and/or, the exhaust communication opening (420) is defined between the suspension end (520) of the partition (500) and the carrying member (300) adjacent thereto, the adjacent exhaust sub-channels (410) are connected by the exhaust communication opening (420).

6. The battery pack according to any one of claims 1 to 4, wherein along a second direction, a number of the partitions (500) under each of the carrying sub-panels (320) increases sequentially, the second direction is a direction in which a height of the placement areas (11) increases.

7. The battery pack according to any one of claims 1 to 6, wherein along the first direction, the partition (500) adjacent to the carrying sub-panel (320) is defined as a first partition (510), along the second direction, a lower panel surface of the carrying sub-panel (320) is not higher than an upper panel surface of the first partition (510) of the adjacent carrying sub-panel (320) on a front side.

8. The battery pack according to any one of claims 1 to 7, wherein along the second direction, the lower panel surface of the carrying sub-panel (320) is aligned with a lower panel surface of the first partition (510) of the adjacent carrying sub-panel (320) on the front side.

9. The battery pack according to any one of claims 1 to 8, wherein along the first direction, an orthogonal projection of the partition (500) on the corresponding carrying sub-panel (320) at least covers the exhaust vent (310) disposed on the carrying sub-panel (320).

10. The battery pack according to any one of claims 1 to 9, wherein the partition (500) is connected to the carrying member (300) and/or an inner wall of the casing (100).

11. The battery pack according to any one of claims 1 to 10, wherein a packaging layer (600) covering the cells (210) is disposed above each of the placement areas (11), along an opposite direction of a second direction, a thickness of the packaging layer (600) corresponding to each of the placement areas (11) increases sequentially, the second direction is a direction in which a height of the placement areas (11) increases.

12. The battery pack according to any one of claims 1 to 11, wherein the packaging layer (600) has a top surface (610), the top surface (610) of the packaging layer (600) is away from the inner bottom surface (10) of the casing (100), the top surfaces (610) of the packaging layers (600) corresponding to at least part of the placement areas (11) are in alignment.
